(19) Europäisches Patentamt
European Patent Office
Office européen des brevets

(11) **EP 1 927 528 B1**

(12) **EUROPÄISCHE PATENTSCHRIFT**

(45) Veröffentlichungstag und Bekanntmachung des Hinweises auf die Patenterteilung:
**23.03.2011 Patentblatt 2011/12**

(51) Int Cl.:
***B62D 7/18*** *(2006.01)*     ***B62D 7/06*** *(2006.01)*

(21) Anmeldenummer: 07116721.7

(22) Anmeldetag: **19.09.2007**

(54) **Radaufhängung eines lenkbaren Rades**

Wheel suspension of a steerable wheel

Suspension de roue pour une roue orientable

(84) Benannte Vertragsstaaten:
**DE FR GB**

(30) Priorität: **30.11.2006 DE 102006056484**

(43) Veröffentlichungstag der Anmeldung:
**04.06.2008 Patentblatt 2008/23**

(73) Patentinhaber: **Ford Global Technologies, LLC Dearborn, MI 48126 (US)**

(72) Erfinder:
• **Loeffelsender, Mark**
  **53859 Niederkassel (DE)**
• **Hilmann, Jörgen**
  **51375 Leverkusen (DE)**

(74) Vertreter: **Dörfler, Thomas**
  **Ford-Werke Aktiengesellschaft**
  **Abt. NH-364**
  **Henry-Ford-Strasse 1**
  **50735 Köln (DE)**

(56) Entgegenhaltungen:
**EP-A- 0 825 040     EP-A- 1 426 203**
**DE-A1- 3 906 501**

## Beschreibung

Die Erfindung betrifft eine Radaufhängung eines lenkbaren Rades, die zumindest einen Radträger aufweist, mit dem zumindest eine Lenkstange und zumindest ein unterer Querlenker verbunden sind.

Bekannte Kraftfahrzeuge mit einer bestimmten Größe sind oftmals mit relativ groß dimensionierten Rädern ausgestattet, welchen den Fahrkomfort des Kraftfahrzeugs vergrößern und eine höhere Tragkraft bieten. Gleichzeitig ist ein Trend zu größeren Frontantriebssystemen, üblicherweise in der Form von quer eingebauten Verbrennungsmotoren zu beobachten, wobei die Kraftfahrzeugkarosserie bzw. - aufbauten aus aerodynamischen Gründen so schmal wie möglich sein sollte. Als Resultat hieraus ergibt sich, daß ein Raum für die Räder verkleinert wird, was im Umkehrschluß bedeutet, daß ein maximal möglicher Lenkwinkel beispielsweise von Fronträdern verringert ist.

Zudem wird ein Trend beobachtet, der zu Kraftfahrzeugen mit längerem Radstand, kombiniert mit dem quer eingebauten Verbrennungsmotor führt. Diese Ausgestaltung vergrößert den möglichen Innenraum des Kraftfahrzeuges und verbessert gleichzeitig den Fahrkomfort. Jedoch verringert ein längerer Radstand genauso einen möglichen Lenkradius.

Um die vorgenannten Probleme zu lösen, kann beispielsweise eine Allradlenkung verwendet werden. Dies erfordert jedoch eine lenkbare Hinterachse, welche die Hinterradaufhängung mit zusätzlichem Gewicht belastet und zusätzliche Bauteile für die Hinterradaufhängung erfordert. Ein solches System erfordert zudem irgendeine Art einer Computersteuerung, da das Lenkverhalten der Hinterräder sowohl in Betrag und in Richtung abhängig der Kraftfahrzeuggeschwindigkeit und anderer Parameter angepaßt werden muß.

Aus der EP 1 426 203 B1 ist ein Verfahren und eine Steuergliedanordnung zur Radspureinstellung für lenkbare Fahrzeuganordnung bekannt. Die Anordnung weist ein Lenkungsstellglied und einen Lenkungsstellmechanismus zum Übertragen von Lenkbewegungen von dem Lenkungsstellglied auf eine Radnabe und dem Lenkungsstellglied auf eine Radnabe und einen Steuerarm auf, wobei der Steuerarm schwenkbar an einem ersten Ende an dem Fahrzeug befestigt und mit einem Kugelgelenk versehen ist. Das Kugelgelenk ist schwenkbar an der Radnabe an einem zweiten Ende befestigt. Eine Betätigung des Lenkungsstellmechanismus verursacht eine Verlagerung des Kugelgelenks um eine vorbestimmte Strecke entlang einer Achse, welche im Wesentlichen quer zu einer mittigen Längsachse des Fahrzeugs verläuft. Die Strecke ist proportional zu einem Fahrzeugradlenkwinkel. Das Lenkungsstellglied wird auf einen steuerbaren Hebelarm, welcher um einen Drehpunkt an einem Radaufhängungssteuerarm drehbar ist. Der steuerbare Hebelarm wirkt auf ein paar Verbindungsstangen, welche schwenkbar an dem Hebelarm an gegenüberliegenden Seiten des Drehpunkts an dem Hebelarm und an der Radnabe an gegenüberliegenden Seiten des Kugelgelenks befestigt sind.

Das Verfahren und die Steuergliedanordnung gemäß der EP 1 426 203 B1 ist dahingehend vorteilhaft, als ein Lenkkreisradius des Lenkeinschlages reduziert werden kann, indem die Drehpunkte der Räder von störenden Bauteilen des Kraftfahrzeugs wegbewegt werden, so daß größere Lenkwinkel erreichbar sind. Zusätzlich ergibt die Lageveränderung der Räder, wenn diese gelenkt werden, eine breitere Spur für die lenkbaren Räder, wodurch das Handling des Kraftfahrzeuges während seiner Kurvenfahrt verbessert wird. Somit wirkt sich der Gegenstand der EP 1 426 203 B1 positiv sowohl auf den Einschlagwinkel als auch auf ein dynamisches Handling des Kraftfahrzeuges aus.

Dokument EP 0 825 040 A2 beschreibt eine Radaufhängung gemäß der Präambel von Anspruch 1.

Der Erfindung liegt die Aufgabe zugrunde, eine Radaufhängung eines lenkbaren Rades der eingangs genannten Art mit einfachen Mitteln dahingehend weiter zu verbessern, daß eine variable, vom Lenkwinkel abhängige Spurbreite mit gleichzeitig guten Wendeeigenschaften des Kraftfahrzeuges erreicht wird, wobei bei gleichem Wendekreis größere Räder eingesetzt werden können oder bei gleichen Rädern und Wendekreis mehr Platz in Querrichtung des Kraftfahrzeugs gesehen für den Motorraum bzw. die Längsträger gewonnen werden soll.

Erfindungsgemäß wird die Aufgabe dadurch gelöst, daß der Radträger zumindest dreiteilig mit einem ersten Radträgerteil, einem zweiten Radträgerteil und einem dritten Radträgerteil ausgeführt ist, die mittels Verbindungselementen derart miteinander verbunden sind, daß die zumindest drei Radträgerteile relativ zueinander bewegbar sind.

Durch die vorteilhafte Aufteilung des Radträgers in zumindest drei Radträgerteile kann der Einschlag des lenkbaren Rades bei gegebener Spurweite über alle Raddimensionen gesehen vergrößert werden, indem der Radmittelpunkt bezogen auf eine Mittellängsachse des Kraftfahrzeuges nach außen bewegt wird. Dies wird vorteilhaft mittels rotatorisch und/oder translatorisch wirkenden Verbindungselementen erreicht. Dadurch wird eine variable Spurbreite erreicht, welche durch den Lenkwinkel gesteuert wird. Je größer der Lenkwinkel ist, desto weiter bewegt sich der Radmittelpunkt, wobei das lenkbare Rad bevorzugt mit dem ersten Radträgerteil verbunden ist, bezogen auf die Längsmittelachse nach außen, wobei folgende Formel zugrunde liegt:

$$dy = \sin(\alpha) * dy0.$$

Bei größeren Lenkwinkeln kann somit vorteilhaft beispielsweise auf einen großen Ausschnitt in einem Längsträger des Kraftfahrzeuges verzichtet werden, welcher bei dem im Stand der Technik bekannten Radaufhängungen notwendig ist. Aufgrund des im Stand der Technik erforderlichen Ausschnittes im Längsträger des Kraftfahrzeuges wird dieser in seiner Stabilität sehr eingeschränkt und muß eventuell sogar verstärkt werden um die erforderlichen Stabilitätseigenschaften zu erreichen.

Aufgrund der vorteilhaften Ausgestaltung der Radaufhängung insbesondere der besonders zweckmäßigen Aufteilung des Radträgers in seine zumindest drei Radträgerteile kann auf einen solchen Ausschnitt im Längsträger jedoch vorteilhaft verzichtet werden, so daß dieser, um die erforderliche Betriebsfestigkeit zu erreichen, nicht weiter verstärkt werden muß, und so daß der Längsträger insgesamt leichter herstellbar ist. Dies bewirkt nicht nur einen Vorteil für die Sicherheit des Kraftfahrzeuges, sondern verringert gleichzeitig das Kraftfahrzeuggewicht, was sich vorteilhaft auf eine mögliche Zuladung des Kraftfahrzeuges und den Kraftstoffverbrauch auswirkt.

Zweckmäßig im Sinne der Erfindung ist, wenn das erste Radträgerteil über ein translatorisch wirkendes Verbindungselement mit dem zweiten Radträgerteil verbunden ist, das mit der zumindest einen Lenkstange über ein Kugelgelenk verbunden ist. Dieses Verbindungselement kann planar oder gekrümmt ausgeführt sein.

Günstig im Sinne der Erfindung ist, wenn das erste Radträgerteil über ein translatorisch und gleichzeitig rotatorisch wirkendes Verbindungselement mit dem dritten Radträgerteil verbunden ist, das mit dem unteren Querlenker über ein rotatorisch wirkendes Verbindungselement verbunden ist. Durch diese vorteilhafte Ausgestaltung kann auf ein aus dem Stand der Technik bekannten Kugelgelenk zur Verbindung des Querlenkers mit dem Radträger verzichtet werden.

Vorteilhaft im Sinne der Erfindung ist, wenn das dritte Radträgerteil über ein rotatorisch wirkendes Verbindungselement mit dem zweiten Radträgerteil verbunden ist.

Zweckmäßigerweise ist das Verbindungselement zwischen dem ersten Radträgerteil und dem zweiten Radträgerteil als Gleitgelenk ausgeführt, wobei das Gleitgelenk in einer bevorzugten Ausgestaltung aus einem an dem ersten Radträgerteil angeordnetem Fortsatz gebildet ist, der in eine in dem zweiten Radträgerteil angeordneten, zum Fortsatz korrespondierenden Ausnehmung eingreift, so daß das erste Radträgerteil relativ zum zweiten Radträgerteil verschiebbar ist. Natürlich kann der Fortsatz auch an dem zweiten Radträgerteil angeordnet sein, wobei die Ausnehmung dann korrespondierend dazu in dem ersten Radträgerteil angeordnet sein könnte.

Günstig im Sinne der Erfindung ist, wenn das Verbindungselement zwischen dem ersten Radträgerteil und dem dritten Radträgerteil als Stift ausgeführt ist, der an dem dritten Radträgerteil angeordnet ist, wobei der Stift in eine in dem ersten Radträgerteil angeordnete Nut eingreift, die sich vertikal zu einer Lenkachse und zu einer Lenkrichtung von einer Außenseite des ersten Radträgerteils in Richtung zu seiner Innenseite und zum zweiten Radträgerteil erstreckt, so daß das dritte Radträgerteil relativ zum ersten Radträgerteil um eine Lenkachse drehbar und das erste Radträgerteil relativ zum dritten Radträgerteil verschiebbar ist. Natürlich kann auch vorgesehen sein, daß die Nut in dem dritten Radträgerteil angeordnet ist, wobei der Stift dem ersten Radträgerteil zugeordnet sein könnte. Der Stift kann jeweils einstückig mit dem jeweiligen Radträgerteil hergestellt sein, wobei natürlich auch eine separate Herstellung mit anschließender, geeigneter Verbindung möglich ist.

Das Verbindungselement zwischen dem zweiten Radträgerteil und dem dritten Radträgerteil ist vorteilhaft als Umlaufgelenk bzw. Drehgelenk ausgeführt, so daß das zweite Radträgerteil und das dritte Radträgerteil um eine Lenkachse relativ zueinander drehbar verbunden sind. Vorteilhaft ist das Umlaufgelenk aus einem an dem dritten Radträgerteil angeordneten Bolzen gebildet, der in eine in dem zweiten Radträgerteil angeordnete Öffnung eingreift, in der zumindest ein Lagerelement angeordnet ist, so daß der Bolzen von dem zumindest einen Lagerelement umgriffen wird. Das Lagerelement kann beispielsweise als Kugellager ausgeführt sein, welches sich mit seinem Innenumfang an dem Bolzen anlegt, und welches sich mit seinem Außenumfang an einem Innenumfang der Öffnung anlegt.

Natürlich kann der Bolzen auch an dem zweiten Radträgerteil angeordnet sein, wobei die Öffnung dann natürlich an dem dritten Radträgerteil angeordnet sein könnte.

Insgesamt werden die drei Radträgerteile über eine Kombination von translatorisch und/oder rotatorisch wirkenden Verbindungselementen verbunden. Die jeweilige Verbindung ist natürlich den erforderlichen Stabilitätsanforderungen angepaßt, wobei natürlich geeignete Schmiervorkehrungen für die Verbindungselemente vorgesehen sind.

Weitere vorteilhafte Ausgestaltungen der Erfindung sind in den Unteransprüchen und der folgenden Figurenbeschreibung offenbart. Es zeigen:

Fig. 1    einen Radträger in einer Prinzipskizze,

Fig. 2    ein erstes Radträgerteil mit einem Ausschnitt des Verbindungsbereiches zum zweiten Radträgerteil in unterschiedlichen Ausgestaltungen als Prinzipskizze,

Fig.3    eine Prinzipskizze eines Verbindungselementes zwischen dem ersten Radträgerteil und dem dritten Radträgerteil, und

Fig. 4    eine Gegenüberstellung des Standes der Technik mit dem erfindungsgemäßen Radträger.

In den unterschiedlichen Figuren sind gleiche Teile stets mit denselben Bezugszeichen versehen, so daß diese in der Regel auch nur einmal beschrieben werden.

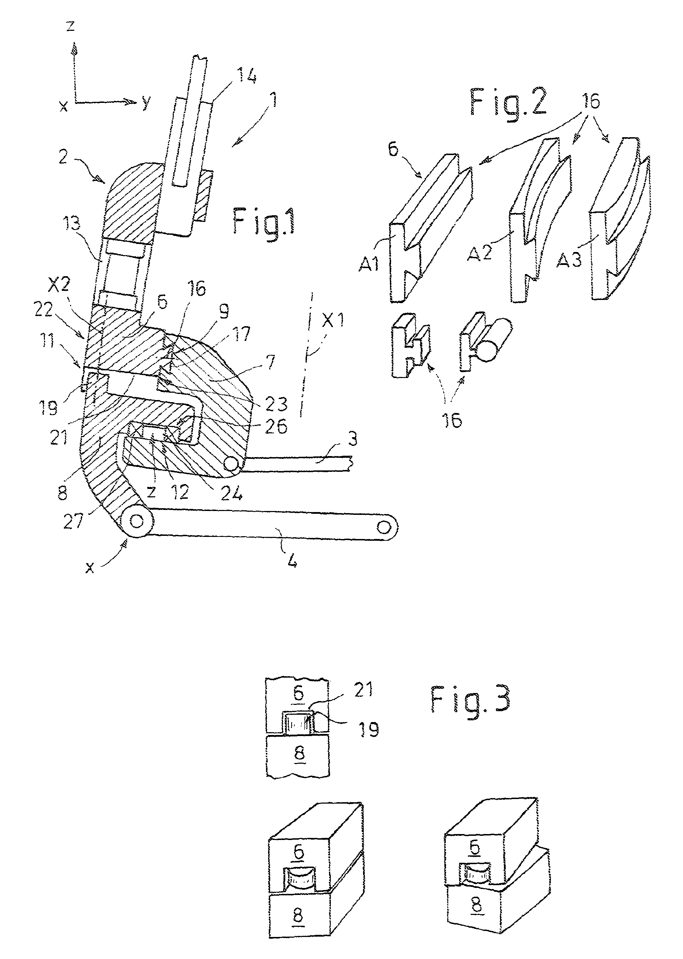

Figur 1 zeigt eine Radaufhängung 1 eines lenkbaren Rades, die zumindest einen Radträger 2 aufweist, mit dem zumindest eine Lenkstange 3 und zumindest ein unterer Querlenker 4 verbunden ist. In dem dargestellten Ausführungsbeispiel ist der Radträger 2 dreiteilig mit einem ersten Radträgerteil 6, einem zweiten Radträgerteil 7 und einem dritten Radträgerteil 8 ausgeführt. Die drei Radträgerteile 6, 7, 8 sind mittels Verbindungselementen 9, 11, 12 derart miteinander verbunden, daß die zumindest drei Radträgerteile 6, 7, 8 relativ zueinander bewegbar sind.

Das erste Radträgerteil 6 weist eine Lagerung 13 für das nicht dargestellte, lenkbare Rad auf, wobei das erste Radträgerteil 1 zudem mit einem Dämpfer 14 verbunden ist.

Das erste Radträgerteil 6 ist über ein translatorisch wirkendes Verbindungselement 9 mit dem zweiten Radträger 7 verbunden, das mit der zumindest einen Lenkstange 3 über ein nicht dargestelltes Kugelgelenk verbunden ist. Das translatorisch wirkende Verbindungselement 9 zwischen dem ersten Radträger 6 und dem zweiten Radträger 7 ist in dem dargestellten Ausführungsbeispiel als Gleitgelenk ausgeführt. Das Gleitgelenk ist aus einem an dem ersten Radträgerteil 6 angeordnetem Fortsatz 16 gebildet, der in eine in dem zweiten Radträgerteil 7 angeordneten, zum Fortsatz 16 korrespondierenden Ausnehmung 17 eingreift, so daß das erste Radträgerteil 6 relativ zum zweiten Radträgerteil 7 verschiebbar ist, wenn die zumindest eine Lenkstange 3 eine Lenkbewegung auf das zweite Radträgerteil 7 überträgt.

In Figur 2 sind unterschiedliche Ausgestaltungen und Ausformungen des Fortsatzes 16 dargestellt.

In einer ersten bevorzugten Ausgestaltung ist der Fortsatz 16 schwalbenschwanzartig ausgeführt, wie die in der Zeichnungsebene oben dargestellten Ausführungsbeispiele zeigen.

Bei dem in Figur 2 mit der Bezeichnung A1 dargestellten Ausführungsbeispiel ist der schwalbenschwanzartige Fortsatz 16 im Wesentlichen linear (planar) ausgeführt, wobei bei dem Ausführungsbeispiel mit der Bezeichnung A2 eine konkave (gekrümmt) Ausgestaltung des schwalbenschwanzartigen Fortsatzes 16 dargestellt ist. Bei dem Ausführungsbeispiel mit der Bezeichnung A3 ist der schwalbenschwanzartige Fortsatz 16 in einer konvexen (gekrümmt) Ausgestaltung dargestellt. Selbstverständlich ist bei den unterschiedlichen Ausgestaltungen der schwalbenschwanzartigen Fortsätze 16 zu den einzelnen Beispielen A1, A2 und A3 die dazu korrespondierende Anlagefläche des ersten Radträgerteiles 1 zum zweiten Radträgerteil 7 korrespondierend zur Ausgestaltung der schwalbenschwanzartigen Fortsätze 16 ausgeführt.

In weiterer Ausgestaltung der Fortsätze 16 ist in Figur 2 in der Zeichnungsebene unten links ein T-förmiger Fortsatz 16 dargestellt, wobei unten rechts ein kreiszylindrischer Fortsatz 16 dargestellt ist, der mittels eines Verbindungssteges mit dem ersten Radträgerteil 6 verbunden ist.

Selbstverständlich können die jeweils dargestellten Fortsätze 16 in ihren unterschiedlichen Ausgestaltungen einstückig mit dem ersten Radträgerteil 6 hergestellt werden, wobei natürlich auch eine separate Herstellung der Fortsätze 16 denkbar ist, die dann mittels geeigneter Verbindungsarten mit dem ersten Radträgerteil 6 verbunden werden können. Aufgrund des translatorisch wirkenden Verbindungselementes 9 bzw. des Gleitgelenkes wird der erste Radträgerteil 6 bei einer durch die Lenkstange 3 ausgeübten Lenkkraft auf das zweite Radträgerteil 7 zwangsverschoben und entsprechend dem Lenkeinschlag mitgenommen.

Das erste Radträgerteil 6 ist zudem über ein translatorisch und gleichzeitig rotatorisch wirkendes Verbindungselement 11 mit dem dritten Radträgerteil 8 verbunden, das mit dem unteren Querlenker 4 über ein rotatorisch wirkendes Verbindungselement 18 verbunden ist. Das Verbindungselement 18 bewirkt eine Drehung in x-Richtung.

Das translatorisch und gleichzeitig rotatorisch wirkende Verbindungselement 11 zwischen dem ersten Radträgerteil 6 und dem dritten Radträgerteil 8 ist als Stift 19 ausgeführt, der an dem dritten Radträgerteil 8 angeordnet ist. Der Stift 19 kann einstückig mit dem dritten Radträgerteil 8 hergestellt sein, oder als separates Bauteil mit diesem in geeigneter Art verbunden sein.

Der Stift 19 greift in eine, in dem ersten Radträgerteil 6 angeordnete Nut 21 ein. Die Nut 21 erstreckt sich vertikal zu einer Lenkachse X1 und zu einer Lenkrichtung von einer Außenseite 22 des ersten Radträgerteils 6 in Richtung zu seiner dazu gegenüberliegenden Innenseite 23 und in Richtung zum zweiten Radträgerteil 7. Zur Außenseite 22 ist die Nut 21 geschlossen und zur Innenseite 23 geöffnet. Damit ist das dritte Radträgerteil 8 relativ zum ersten Radträgerteil 6 um eine Lenkachse X2 drehbar, die durch den Stift 19 verläuft, wobei das erste Radträgerteil 6 gleichzeitig relativ zum dritten Radträgerteil 8 in translatorischer Richtung verschiebbar ist. Das translatorisch und rotatorisch wirkende Verbindungselement 11 ist somit ein kombiniertes Dreh-Gleitgelenk.

Das dritte Radträgerteil 8 ist über ein rotatorisch wirkendes Verbindungselement 12 mit dem zweiten Radträgerteil 7 verbunden.

Das rotatorisch wirkende Verbindungselement 12 zwischen dem zweiten Radträgerteil 7 und dem dritten Radträgerteil 8 ist als Umlaufgelenk ausgeführt, so daß das zweite Radträgerteil 7 und das dritte Radträgerteil 8 um eine erste Lenkachse X1 relativ zueinander drehbar verbunden sind. Das rotatorisch wirkende Verbindungselement 12 bewirkt eine Drehung in z-Richtung.

Die beiden Lenkachsen X1 und X2 sind in Figur 1 gestrichelt dargestellt, wobei die zweite Lenkachse X2 durch den Stift 19 des translatorisch und rotatorisch wirkenden Verbindungselementes 11 zwischen dem ersten Radträgerteil 6 und dem dritten Radträgerteil 8 verläuft.

Die erste Lenkachse X1 verläuft kolinear zur zweiten Lenkachse X2 und ist bezogen auf die zweite Lenkachse X2 nach innen, also in Richtung zu einer nicht dargestellten Längsachse des Kraftfahrzeuges versetzt.

Das Umlaufgelenk bzw. das rotatorisch wirkende Verbindungselement 12 zwischen dem zweiten Radträgerteil 7 und dem dritten Radträgerteil 8 ist aus einem an dem dritten Radträgerteil 8 angeordneten Bolzen 24 gebildet, der in eine in dem zweiten Radträgerteil 7 angeordneten Öffnung 26 eingreift. In der Öffnung 26 ist ein Lagerelement 27 angeordnet, so daß der Bolzen 24 von dem zumindest einen Lagerelement 27 umgriffen wird. Das Umlaufgelenk ist somit quasi als Drehgelenk ausgebildet.

Das Lagerelement 27 ist in bevorzugter Ausgestaltung als Kugellager ausgeführt, welches mit seinem Innenumfang den Bolzen 24 umgreift, und welches mit seinem Außenumfang an einer Innenseite der Öffnung 26 bevorzugt spielfrei anliegt.

Wie bereits oben beschrieben, ist der Querlenker 4 über ein rotatorisch wirkendes Verbindungselement 18 mit dem dritten Radträgerteil 8 verbunden. Hierdurch kann vorteilhaft auf ein im Stand der Technik üblicherweise eingesetztes Kugelgelenk zur Verbindung des Querlenkers 4 mit dem Radträger 2 verzichtet werden.

Die translatorisch und/oder rotatorisch wirkenden Verbindungselemente 9, 11, 12 bewirken nun, wenn über die Lenkstange 3 eine Lenkbewegung auf das zweite Radträgerteil 7 übertragen wird, daß sich das zweite und dritte Radträgerteil 7 und 8 relativ zueinander dreht, wobei das erste Radträgerteil 6 translatorisch verschoben wird und in Richtung des Lenkeinschlages in Drehrichtung gesehen mitgenommen wird. Da mit dem ersten Radträgerteil 6 auch das nicht dargestellte, lenkbare Rad verbunden ist, wird dieses bzw. sein Mittelpunkt bei einer Lenkbewegung nicht nur in die gewünschte Richtung gedreht, sondern auch bezogen auf eine Mittellängsachse des Kraftfahrzeuges nach außen hin verschoben.

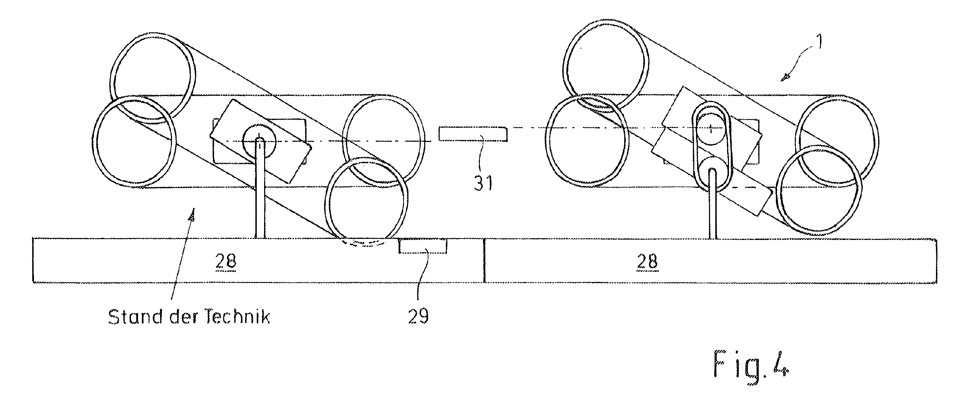

Dieser Effekt ist beispielhaft in Figur 4 dargestellt, wobei in der rechten Zeichnungsebene der Figur 4 eine Radaufhängung nach dem Stand der Technik dargestellt ist, und wobei in der rechten Zeichnungsebene der Figur 4 eine Radaufhängung gemäß der Erfindung dargestellt ist.

Wie der Radaufhängung nach dem Stand der Technik zu entnehmen ist, muß ein Längsträger des Kraftfahrzeuges ausgeschnitten (Kästchen 29) werden, um die möglichen Lenkwinkel bzw. Lenkeinschläge durchführen zu können. Auf einen solchen Ausschnitt im Bereich des Längsträgers 28 kann bei einer Radaufhängung 1 gemäß der Erfindung verzichtet werden, da das lenkbare Rad bzw. sein Mittelpunkt bei einer Lenkbewegung nach außen verschoben wird.

In Figur 4 ist beispielhaft ein Lenkwinkel von 30° dargestellt, wobei gemäß der Erfindung bei großem Lenkwinkel bzw. bei größer werdendem Lenkwinkel der Radmittelpunkt entsprechend weiter nach außen verschoben wird. Dies ist in Figur 4 mittels des Kästchens 31 dargestellt.

**Patentansprüche**

1. Radaufhängung eines lenkbaren Rades, die zumindest einen Radträger (2) aufweist, mit dem zumindest eine Lenkstange (3) und zumindest ein unterer Querlenker (4) verbunden ist,
**dadurch gekennzeichnet, daß**
der Radträger (2) zumindest dreiteilig mit einem ersten Radträgerteil (6), einem zweiten Radträgerteil (7) und einem dritten Radträgerteil (8) ausgeführt ist, die mittels Verbindungselementen (9, 11, 12) derart miteinander verbindbar sind, daß die zumindest drei Radträgerteile (6, 7, 8) relativ zueinander bewegbar sind.

2. Radaufhängung nach Anspruch 1,
**dadurch gekennzeichnet, daß**
der erste Radträgerteil (6) über ein translatorisch wirkendes Verbindungselement (9) mit dem zweiten Radträgerteil (7) verbunden ist, das mit der zumindest einen Lenkstange (3) über ein Kugelgelenk verbunden ist.

3. Radaufhängung nach Anspruch 1 oder 2,
**dadurch gekennzeichnet, daß**
das erste Radträgerteil (6) über ein translatorisch und rotatorisch wirkendes Verbindungselement (11) mit dem dritten Radträgerteil (8) verbunden ist, das mit dem unteren Querlenker (4) über ein rotatorisch wirkendes Verbindungselement (18) verbunden ist.

4. Radaufhängung nach einem der vorhergehenden Ansprüche,
**dadurch gekennzeichnet, daß**
das dritte Radträgerteil (8) über ein rotatorisch wirkendes Verbindungselement (12) mit dem zweiten Radträgerteil (7) verbunden ist.

5. Radaufhängung nach einem der vorhergehenden Ansprüche,
**dadurch gekennzeichnet, daß**
das Verbindungselement (9) zwischen dem ersten Radträgerteil (6) und dem zweiten Radträgerteil (7) als Gleitgelenk ausgeführt ist.

6. Radaufhängung nach Anspruch 5,
**dadurch gekennzeichnet, daß**
das Gleitgelenk aus einem an dem ersten Radträgerteil (6) angeordneten Fortsatz (16) gebildet ist, der in einer in dem zweiten Radträgerteil (7) angeordneten, zum Fortsatz (16) korrespondierenden Ausnehmung (17) eingreift, so daß das erste Radträgerteil (6) relativ zum zweiten Radträgerteil (7) verschiebbar ist.

**7.** Radaufhängung nach einem der vorhergehenden Ansprüche,
**dadurch gekennzeichnet, daß**
das Verbindungselement (11) zwischen dem ersten Radträgerteil (6) und dem dritten Radträgerteil (8) als Stift (19) ausgeführt ist, der an dem dritten Radträgerteil (8) angeordnet ist, wobei der Stift (19) in eine in dem ersten Radträgerteil (6) angeordneten Nut (21) eingreift, die sich vertikal zu einer Lenkachse und zu einer Lenkrichtung von einer Außenseite (22) des ersten Radträgerteils (6) in Richtung zu seiner Innenseite (23) und zum zweiten Radträgerteil (7) erstreckt, so daß das dritte Radträgerteil (8) relativ zum ersten Radträgerteil (6) um eine Lenkachse drehbar ist, und daß das erste Radträgerteil (6) relativ zum dritten Radträgerteil (8) verschiebbar ist.

**8.** Radaufhängung nach einem der vorhergehenden Ansprüche,
**dadurch gekennzeichnet, daß**
das Verbindungselement (12) zwischen dem zweiten Radträgerteil (7) und dem dritten Radträgerteil (8) als Umlaufgelenk ausgeführt ist, so daß das zweite Radträgerteil (7) und das dritte Radträgerteil (8) um eine Lenkachse relativ zueinander drehbar verbunden sind.

**9.** Radaufhängung nach Anspruch 8,
**dadurch gekennzeichnet, daß**
das Umlaufgelenk aus einem an dem dritten Radträgerteil (8) angeordneten Bolzen (24) gebildet ist, der in eine in dem zweiten Radträgerteil (7) angeordneten Öffnung (26) eingreift, in der zumindest ein Lagerelement (27) angeordnet ist, so daß der Bolzen (24) von dem zumindest einen Lagerelement (27) umgriffen wird.

**Claims**

**1.** Wheel suspension of a steerable wheel, which wheel suspension has at least one wheel carrier (2) to which are connected at least one steering rod (3) and at least one lower transverse link (4),
**characterized in that**
the wheel carrier (2) is designed in at least three parts with a first wheel carrier part (6), a second wheel carrier part (7) and a third wheel carrier part (8), which wheel carrier parts can be connected to one another by means of connecting elements (9, 11, 12) in such a way that the at least three wheel carrier parts (6, 7, 8) are moveable relative to one another.

**2.** Wheel suspension according to Claim 1,
**characterized in that**
the first wheel carrier part (6) is connected to the second wheel carrier part (7) by means of a translatorily acting connecting element (9), which connecting element (9) is connected to the at least one steering rod (3) by means of a ball joint.

**3.** Wheel suspension according to Claim 1 or 2,
**characterized in that**
the first wheel carrier part (6) is connected to the third wheel carrier part (8) by means of a translatorily and rotationally acting connecting element (11), which connecting element (11) is connected to the lower transverse link (4) by means of a rotationally acting connecting element (18).

**4.** Wheel suspension according to one of the preceding claims,
**characterized in that**
the third wheel carrier part (8) is connected to the second wheel carrier part (7) by means of a rotationally acting connecting element (12).

**5.** Wheel suspension according to one of the preceding claims,
**characterized in that**
the connecting element (9) between the first wheel carrier part (6) and the second wheel carrier part (7) is designed as a sliding joint.

**6.** Wheel suspension according to Claim 5,
**characterized in that**
the sliding joint is formed from a projection (16) which is arranged on the first wheel carrier part (6) and which engages into a recess (17), which corresponds to the projection (16), in the second wheel carrier part (7), so that the first wheel carrier part (6) is moveable relative to the second wheel carrier part (7).

**7.** Wheel suspension according to one of the preceding claims,
**characterized in that**
the connecting element (11) between the first wheel carrier part (6) and the third wheel carrier part (8) is designed as a pin (19) which is arranged on the third wheel carrier part (8), with the pin (19) engaging into a groove (21) which is arranged in the first wheel carrier part (6) and extends vertically with respect to a steering axis and with respect to a steering direction from an outer side (22) of the first wheel carrier part (6) in the direction of its inner side (23) and of the second wheel carrier part (7), so that the third wheel carrier part (8) is rotatable relative to the first wheel carrier part (6) about a steering axis, and so that the first wheel carrier part (6) is moveable relative to the third wheel carrier part (8).

**8.** Wheel suspension according to one of the preceding claims,
**characterized in that**

the connecting element (12) between the second wheel carrier part (7) and the third wheel carrier part (8) is designed as a revolute joint, so that the second wheel carrier part (7) and the third wheel carrier part (8) are connected so as to be rotatable relative to one another about a steering axis.

9. Wheel suspension according to Claim 8,
**characterized in that**
the revolute joint is formed from a bolt (24) which is arranged on the third wheel carrier part (8) and which engages into an opening (26) arranged in the second wheel carrier part (7), in which opening (26) is arranged at least one bearing element (27), so that the bolt (24) is encompassed by the at least one bearing element (27).

**Revendications**

1. Suspension de roue pour une roue orientable, qui présente au moins un support de roue (2) auquel est raccordée au moins une bielle de direction (3) et au moins un bras oscillant transversal inférieur (4),
**caractérisée en ce que**
le support de roue (2) est réalisé au moins en trois parties avec une première partie de support de roue (6), une deuxième partie de support de roue (7) et une troisième partie de support de roue (8), qui peuvent être raccordées l'une à l'autre au moyen d'éléments de connexion (9, 11, 12) de telle sorte que les au moins trois parties de support de roue (6, 7, 8) puissent être déplacées les unes par rapport aux autres.

2. Suspension de roue selon la revendication 1,
**caractérisée en ce que**
la première partie de support de roue (6) est raccordée par le biais d'un élément de connexion (9) agissant en translation à la deuxième partie de support de roue (7), qui est raccordée à l'au moins une bielle de direction (3) par le biais d'une articulation à rotule.

3. Suspension de roue selon la revendication 1 ou 2,
**caractérisée en ce que**
la première partie de support de roue (6) est raccordée par le biais d'un élément de connexion (11) agissant en translation et en rotation à la troisième partie de support de roue (8), qui est raccordée au bras oscillant transversal inférieur (4) par le biais d'un élément de connexion (18) agissant en rotation.

4. Suspension de roue selon l'une quelconque des revendications précédentes,
**caractérisée en ce que**
la troisième partie de support de roue (8) est raccordée par le biais d'un élément de connexion (12) agissant en rotation à la deuxième partie de support de roue (7).

5. Suspension de roue selon l'une quelconque des revendications précédentes,
**caractérisée en ce que**
l'élément de connexion (9) entre la première partie de support de roue (6) et la deuxième partie de support de roue (7) est réalisé sous forme de joint glissant.

6. Suspension de roue selon la revendication 5,
**caractérisée en ce que**
le joint glissant est formé d'une saillie (16) disposée sur la première partie de support de roue (6), laquelle saillie vient en prise dans un évidement (17) correspondant à la saillie (16) et disposé dans la deuxième partie de support de roue (7), de sorte que la première partie de support de roue (6) puisse être coulissée par rapport à la deuxième partie de support de roue (7).

7. Suspension de roue selon l'une quelconque des revendications précédentes,
**caractérisée en ce que**
l'élément de connexion (11) entre la première partie de support de roue (6) et la troisième partie de support de roue (8) est réalisé sous forme de goupille (19), qui est disposée sur la troisième partie de support de roue (8), la goupille (19) venant en prise dans une rainure (21) disposée dans la première partie de support de roue (6), laquelle rainure s'étend perpendiculairement par rapport à un axe de direction et par rapport à un sens de direction depuis un côté extérieur (22) de la première partie de support de roue (6) dans la direction de son côté intérieur (23) et jusqu'à la deuxième partie de support de roue (7), de sorte que la troisième partie de support de roue (8) puisse tourner par rapport à la première partie de support de roue (6) autour d'un axe de direction, et **en ce que** la première partie de support de roue (6) peut coulisser par rapport à la troisième partie de support de roue (8).

8. Suspension de roue selon l'une quelconque des revendications précédentes,
**caractérisée en ce que**
l'élément de connexion (12) est réalisé entre la deuxième partie de support de roue (7) et la troisième partie de support de roue (8) sous forme d'articulation rotoïde, de sorte que la deuxième partie de support de roue (7) et la troisième partie de support de roue (8) soient raccordées de manière à pouvoir tourner l'une par rapport à l'autre autour d'un axe de direction.

9. Suspension de roue selon la revendication 8,
**caractérisée en ce que**
l'articulation rotoïde est formée d'un boulon (24) disposé sur la troisième partie de support de roue (8), qui vient en prise dans une ouverture (26) disposée dans la deuxième partie de support de roue (7), dans laquelle ouverture est disposé au moins un élément de palier (27), de sorte que le boulon (24) soit engagé sur sa périphérie par l'au moins un élément de palier (27).

Fig.1

Fig.2

Fig.3

Fig. 4

Stand der Technik

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1426203 B1

- EP 0825040 A2